# EUROPEAN PATENT SPECIFICATION

(11) **EP 0 658 314 B1**
(45) Date of publication and mention of the grant of the patent: **23.09.1998**
(21) Application number: 94119690.9
(22) Date of filing: 13.12.1994
(51) Int. Cl.: A23K 1/10, A23N 17/00, B30B 9/12

(54) **Procedure for producing fodder raw material, fodder raw material and apparatus for processing keratinous material**
Verfahren zur Herstellung von rohem Futtermaterial, rohes Futtermaterial und Vorrichtung zur Herstellung von Keratinmaterial
Procédé pour préparer des matières fourragères brutes, matières fourragères brutes et appareil de fabrication de matières kératiniques

(30) Priority: 14.12.1993 FI 935627
(43) Date of publication of application: 21.06.1995
(73) Proprietor: SUOMEN REHU OY, 00241 Helsinki (FI)
(72) Inventor: Forsman, Karl-Erik, SF-02170 Espoo (FI); Laithinen, Matti, SF-00241 Helsinki (FI)
(74) Representative: Papula, Antti

(56) References cited:
- FR-A- 2 706 792
- US-A- 3 360 820
- US-A- 4 151 306
- PATENT ABSTRACTS OF JAPAN vol. 11, no. 184 (C-427) 12 June 1987 & JP-A-62 006 639 (TATSUMI CHIKURA) 13 January 1987
- POULTRY SCIENCE, vol.72, no.8, 1993, US pages 1515 - 1527 C. TADTIYANANT ET AL. 'Extrusion processing used to convert dead poultry, feathers, eggshells, hatchery waste, and mechanically deboned residue into feedstuffs for poultry'
- DATABASE WPI Week 8615, Derwent Publications Ltd., London, GB; AN 86-096757 & JP-A-61 040 753 (CHIKURA T) 27 February 1986
- DATABASE WPI Week 8503, Derwent Publications Ltd., London, GB; AN 85-016079 & JP-A-59 213 367 (YAMAMOTO T) 3 December 1984

## Description

The present invention concerns a procedure for producing fodder raw material containing keratinous material and fodder raw material containing keratinous material, and apparatus for processing keratinous material which is being made into fodder raw material, as stated in claims 1, 11 and 12.

Keratinous material is in this context understood to be generally whatever material containing keratin, in particular material having capillary structures, such as feathers, animal hair, wool, etc., or a mixture of these.

Feathers, which are rich in keratin protein, have been used in fodder industry for raw material in making animal fodders. Owing to poor utilizability, it has usually been necessary to treat the feathers chemically or enzymatically in order to convert the material into a form which is more easily digestible in the animal's digestive tract. Chemical treatment is implemented e.g. by means of acid hydrolysis, using mineral acids. In enzymatic treatment e.g. pepsin is used for enzyme.

Commonly, in the procedure for producing feather fodder raw material the feathers are wet-cleaned, e.g. sterilized, and the cleaned, wet feathers are usually cut up/comminuted in order to enhance the acid or enzyme treatment taking place in the next step. The treated product is thereafter brought into the form in which it will be used in the fodder.

Owing to the structure of feathers, the cleaned, wet feathers cannot be cut up/comminuted as they are: reduction of the material's moisture content is first required. However, reduction of moisture content is problematic because water is firmly bound in the capillaries of the feathers. When using existing methods and cutting/comminuting apparatus, drying the feathers, i.e. removal of extra water by evaporation, has been the sole usable way to achieve appropriate moisture content. A drying step like this requires a special drying apparatus, and it adds to the number of steps in the treatment process.

US 4,151,306 discloses a screw press for dewatering feathers wherein the moisture flows through slots in the compression barrell in order to reduce the cost of thermally drying. - However, this apparatus does not solve the problems mentioned above, ie. with this apparatus the feather material is pressed to dry matter content about 30 - 40 % (claim 2) only, which does not fulfill the requirements, specially when thinking the following steps in the procedure.

JP 62006639 discloses the production of feather meal in an apparatus which has a compression dehydration zone with a number of liquid-leaking perforations and a high temperature heating zone and a hollow rotary shaft having screw blaid at the outer circumference. Excses water is squeezed out by this process. The raw feather is then heating with hot steam introduced into the steam jacket and hollow rotary shaft. - This apparatus does not, however, solve all the above problems. Especially, the drying the feather material having capillaries causes difficulties, ie. feathers and hairs cannot be pressed and treated to the wanted water content and consistence, specially when thinking the following treatment steps in the procedure with additional chemicals.

The object of the present invention is to eliminate the drawbacks mentioned above.

Specifically, the object of the invention is to disclose a novel procedure for producing fodder raw material containing keratinous material, with the aid of which the processing steps of keratinous material, such as feathers and/or hair, can he made fewer compared with procedures known in the art. Furthermore, the object of the invention is to disclose a fodder raw material containing keratinous material which has been produced by said procedure.

The object of the invention is furthermore to disclose an apparatus for processing keratinous material which is being made into fodder raw material, with the aid of which the of the keratinous material treating steps can he simplified and the material can he comminuted.

The invention is eminently applicable in processing keratinous material having capillary structures, such as feathers and hair.

Regarding the features characterizing the invention, reference is made to the claims.

In the procedure of the invention, the moisture content of cleaned, wet feathers, hairs, etc. can he reduced by a mechanical procedure instead of the drying method which has been used heretofore. The invention is based on the fundamental idea that the cleaned, wet feathers, hairs, etc. are dewatered by pressing. By effect of the pressure generated by pressing, water can also he liberated from the capillaries which are part of the structure of the feathers. The water liberated from the material is carried off. In the procedure of the invention, the pressed keratinous material is cut up further to a degree of comminution about 1 - 30 mm, suitably about 2 - 10 mm. The pressed material is pressed through a matrix, or perforated plate, and cut with the aid of at least one rotating cutter blade against said perforated plate.

Subsequent to pressing, the feathers, hairs, etc. can immediately be treated enzymatically/chemically in order to produce fodder raw material.

From US 3,360,820 it is known a worm press for plastic working and loosening synthetic rubber. The warm press has a cutter device arranged near the perforated disk from which the rubber strands are extruded consisting of one or more knives arranged at, and rotating with the shaft. - However, said reference does not disclose perforated shell of the worm press for squeezing water from the material. Further, said reference does not disclose the problems relating to drying feathers and other materials having capillaries and being very difficult to press dry. Actually, said reference discloses cutting of plastic and rubber materials, ie. materials being easily cut up, not treatment of capillarious, fibrous materials.

The wet feather, hair or equivalent material may be material directly derived from a cleaning proecss, e.g. possibly precentrifuged material. The dry matter content of the wet keratinous material being pressed may be e.g. about 10-30% by weight, suitably about 15-20% by weight.

In the procedure of the invention, the keratinous material is pressed to dry matter content of advantageously about 30-65% by weight, suitably about 40-60% by weight.

The pressing and/or cutting action as taught by the invention advantageously causes heating of the keratinous material. This is particularly advantageous when the cut-up material is subjected to enzyme treatment in the next step. In an advantageous embodiment, pressing and cutting of the material is performed in such manner that the temperature of the cut-up keratinous material coming from the cutting step is about 20-65'C, advantageously 40-50'C, whereby the material thus obtained can be subjected to enzyme treatment directly without preheating the material.

Further, according to an advantageous embodiment, to the cut-up keratinous material that has been obtained are added about 0-80% by weight, such as about 5-50% by weight, of one or several vegetable-based fodder components commonly known in the art, which are selected from the group comprising soybean, cereal, plant husks, or any equivalent carbohydrate-containing, known fodder component possessing fodder value, and enzyme preparation decomposing keratinous material and/or the fodder component that was added; the mixture thus obtained is kept for about 1 min to 10 h, e.g. 10 min to 1 h, such as about 20-30 min, at a temperature about 20-65°C, such as about 40-50°C, and heated and/or agitated if needed. The enzyme-treated mixture is extruded in an extruder: the extruded product is dried and brought into a uniformly granular form. Extrusion improves the utilizability of the product. Moreover, the extruded product is nearly sterile.

In the procedure of the invention, the fodder component which is added is advantageously plant material which one intends even otherwise to include in the fodder in extruded form. It is then possible to perform extrusion of the added fodder component and of the keratinous material, as taught by the invention, in one single step and thus to combine some production steps of fodder raw materials. The extrusion process produces a fodder raw material product composed of keratinous material and the added fodder component. Using an added fodder component further affords the advantage that agitation of the mixture of fodder component and keratinous material is accompanied by generation of friction heat, which through appropriate selection of the fodder component quantity is sufficient to maintain a temperature appropriate for enzymatic activity, about 20-65°C, throughout the treatment. The treatment can thus be carried out without any separate additional heating.

The enzyme treatment according to the invention can be implemented with any enzyme known in the art which decomposes keratinous material, such as pepsin. A suitable quantity of enzyme preparation is added. If require, one may also add to the mixture an enzyme preparation decomposing the added fodder component.

The invention further concerns a fodder raw material containing keratinous material which has been produced by a method according to the invention. The fodder raw material of the invention containing keratinous material contains about 20-100% by weight processed keratinous material and about 0-80% by weight of one or several vegetable-based additives commonly known in the art, selected from the group comprising soybean, cereal, plant husks or an equivalent known carbohydrate-containing fodder component possessing fodder value.

The fodder raw material of the invention can be admixed to any other vegetable-based or animal-based fodder raw materials known in the art for obtaining a completed fodder, e.g. a farm fodder or fur farming fodder.

The fodder raw material of the invention may also be used in connection with fermented silage fodders. Fodder raw material according to the invention may for instance be admixed to slaughtering offal; to the mixture thus obtained lactic acid bacteria are added and when required, if for instance the fodder raw material according to the invention contains no vegetable-based added fodder component, a carbohydrate source, and the mixture is fermented. The end product thus obtained is an excellent raw material e.g. for fresh fodder to be served to fur animals.

The procedure of the invention can be carried out with any apparatus arrangement whatsoever which is appropriate to the purpose. In the procedure of the invention the pressing step and the cutting step may be implemented as separate steps, with separate apparatus, or advantageously as consecutive steps in one apparatus. The invention furthermore discloses an apparatus for processing keratinous material which is to be processed to fodder raw material, in particular feathers and/or hairs. The apparatus comprises a feed section, provided with a feed aperture for receiving the wet keratinous material; a press section, provided with a screw press encircled by a perforated shell, for compressing the wet material coming from the feed section and dewatering it through holes in said shell; a cutter device for cutting up the keratinous material which has been compressed: and an exit aperture for removing the cut-up material from the apparatus.

The free cross section area of the press screw in the press section of the apparatus of the invention advantageously tapers dawn in the feed direction and is comparatively small at its smallest in order to achieve compression of the keratinous material. Advantageously, the distance between the outer surface of the shaft of the screw press and the shell enclosing the screw press is about 4-20%, such as 7-15% of the inner shell diameter for achieving adequate compression. In the press section, the pitch of the screw press may be disposed to become smaller in the direction towards the cutter section.

In an advantageous embodiment of the apparatus of the invention, the screw press extends from the feed section to the press section. In that case the screw press serves in the feed section as screw conveyor for transporting the keratinous material to the press section. The material feed from the feed section to the press section may be arranged in other ways as well.

Furthermore, on the inner surface of the press section advantageously guide rails longitudinal to the axis of the screw press have been provided to guide the travel of keratinous material in the apparatus. Guide rails running in the direction of propagation of the keratinous material may equally be provided on the entire length of the apparatus, i.e., in the feed, press and cutter sections.

In the apparatus of the invention, the number of holes in the shell of the press section is advantageously about 100-900, such as about 400-500. The hole diameter has been so dimensioned that no keratinous material can escape through the holes.

In the apparatus of the invention, the cutter device is advantageously disposed in extension of the screw press, in conjunction with the exit aperture of the apparatus of the invention. The cutter device comprises, consecutively disposed, at least one cutter provided with at least one rotating blade attached to a hub, and at least one perforated plate. To particular advantage the cutter device may comprise a plurality of blade cutters and perforated plates, consecutively and alternatingly installed.

Thanks to the arrangement of the press section and the cutter device in the apparatus of the invention, the temperature of the keratinous material can be raised in these sections by effect of friction heat.

In the procedure of the invention and/or with the apparatus of the invention the moisture content reducing step and the material cutting step can be conveniently carried out in one work step, whereby the treatment process of the keratinous material is speeded up and the number of fodder raw material production steps is reduced. Furthermore, thanks to the apparatus embodiment of the invention the fodder production procedure need not include any material preheating step such as usually precedes enzyme treatment.

The invention is described in the following in more detail with the aid of embodiments, referring to the figures, wherein
Fig. 1 presents the flow diagram of a procedure according to the invention serving to produce fodder raw material containing keratinous material, and
Fig. 2 presents an apparatus according to the invention for processing keratinous material which is to be made into fodder raw material, and which apparatus can be used in the procedure of the invention.

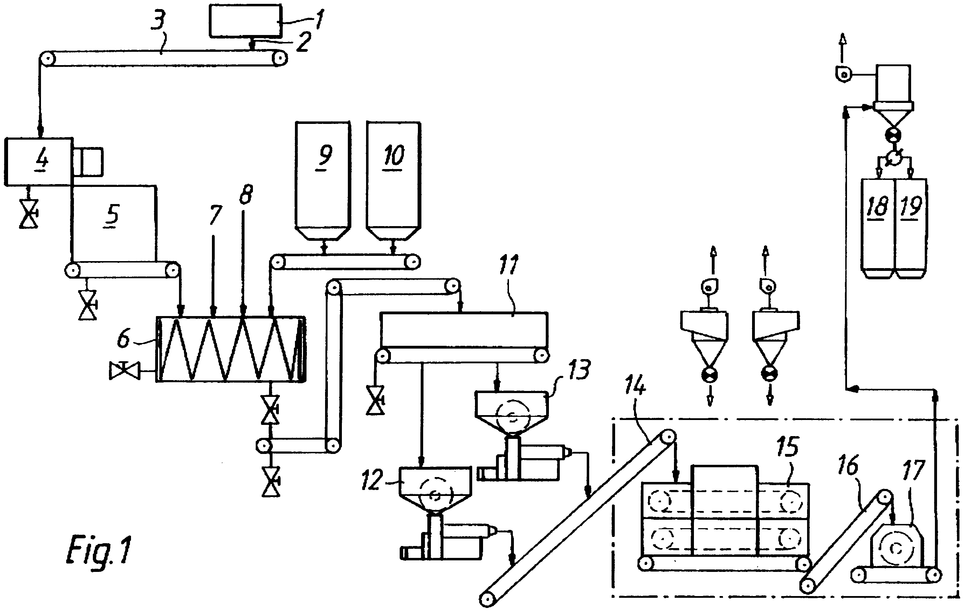

In Fig. 1 is schematically depicted an advantageous procedure according to the invention for producing fodder raw material containing keratinous material, in which feathers are used For material. Feathers 2, which have been wet-cleaned, e.g., sterilized, and precentrifuged in a feather drum 1 and which have dry matter content about 22% by weight, are transported with a conveyor 3 to a press and cutter apparatus 4. In the apparatus 4, the feathers are first compressed to 35-65% by weight dry matter content, whereafter they are cut up to degree of comminution about 2-10 mm. The temperature of the feathers increases during pressing and cutting so that the temperature of the material emerging from the apparatus 4 is about 40-50°C. The cut-up feathers are carried through an intermediate container 5 directly and without heating to a mixer 6, where to them is added enzyme preparation 7 decomposing feather matter, e.g. pepsin, and at least one fodder component 8, 9 and/or 10, which may be soybean, cereal, cereal husk matter or another equivalent, known fodder component containing carbohydrates and possessing fodder value, and possibly enzyme preparation which decomposes the fodder component that has been added. The mixture thus obtained is mixed in the mixer 6 without additional heating for about 20-30 min in order to produce adequate enzyme effect. During this period the temperature of the mixture is held at about 40-50°C by effect of friction heat generated on mixing. The treated mixture is transferred from the mixer 6 and divided between extruders 12 and 13, in which the mixture is extruded at 145°C. The product coming from extruders 12 and 13 is with a conveyor 14 transported to a dryer arrangement 15, whence the dried fodder raw material product containing feather material is transported with a conveyor 16 to a hammer mill 17 in order to obtain a product of uniform granulation. The fodder raw material containing feather material is finally transported to finished product storage silos 18 and 19.

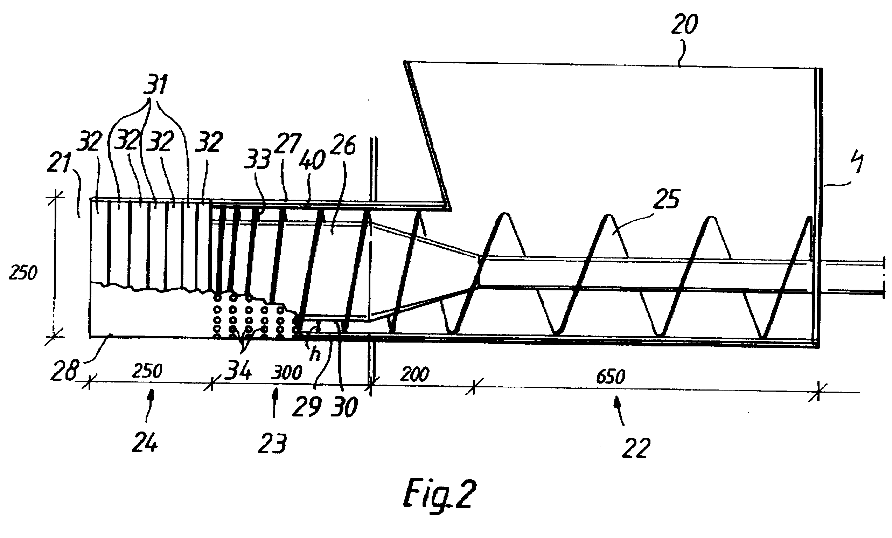

Fig. 2 depicts in greater detail the press and cutter apparatus 4 according to the invention, employed in connection with the procedure description of Fig, 1, which represents an advantageous apparatus embodiment of the invention. The apparatus 4, which is provided with feed and exit apertures 20,21, comprises a feed section 22 in conjunction with the feed aperture 20, a press section 23, and a cutter device 24 in conjunction with the exit aperture 21. The apparatus 4 is provided with a screw press 25. The screw press 25 extends from the feed section 22 to the press section 23 in such manner that its shaft 26 increases in thickness towards the press section 23, while the overall diameter of the screw press is constant. The screw pitch of the screw press 25 also advantageously diminishes towards the ultimate end of the press section 23.

Further, in the press section 23 the screw press 25 is encircled by a perforated shell 27. The shell has been perforated with about 400-500 holes 34. The inner surface of the shell 27 is moreover provided with guide rails 40, longitudinal to the axis of the screw press 25. Such guide rails may, if desired, also be provided on the inner surfaces of the shell of the feed section and the shell of the cutter section.

The diameter of the shaft 26 of the screw press 25 is significantly larger in the press section 23 than in the feed section 22. Therefore in the press section 23 the free cross section area of the screw press 25 is quite small. In an advantageous embodiment the distance h between the inner shell surface 29 and the outer surface 30 of the shaft is e.g. only about 4 mm when the inner diameter of the shell 27 is about 250 mm.

The cutter device 24 has been disposed in conjunction with the shaft 26 of the screw press 25. The cutter device 24 comprises a plurality of cutters 31, at least one blade being connected to their hub, and of perforated plates 32 consecutively alternating with the cutters 31. In the exit aperture 21 of the apparatus 4 a perforated plate 32 has been mounted as ultimate component. The cutters have been arranged within the shell 28 to be rotatable about their central axis.

Other kinds of cutter or comminution apparatus, such as a mill, may equally be used.

In operation, the material coming in through the feed aperture 20, e.g. wet feathers and/or pig bristles, is transported with the screw press 25 towards the press section 23. In the press section 23 the screw press 25 compresses strongly the material proceeding through the press. Hereby also water bound in the capillaries of the material can be liberated, this water escaping through the holes (not depicted in Fig. 2) of the shell. The feathers and/or bristles are compressed to about 40-60% by weight dry matter content. Due to action of the guide rails 40 provided on the inner surface of the shell 27, the material being compressed cannot revolve in the press and is rather made to progress towards the cutter device 24.

The compressed feathers and/or bristles are transported with the screw press 25 from the ultimate end of the press section to the cutter device 24, where the rotating blade cutters 31 cut the material against the perforated plate 32 cooperating with each cutter 31. The cut-up material is finally voided from the apparatus 4 through the perforated plate 32 of the cutter device. The degree of comminution of the feathers and/or bristles thus obtained is e.g. on the order of 2-10 mm.

As a result of the press and cutter arrangement of the invention, heat is generated during compression and cutting, whereby the keratinous material which is being processed is heated up. By appropriate arrangements, e.g. by adapting the material feed rate and/or the speed of the screw press, one can from the apparatus obtain cut-up material which is ready e.g. for enzyme treatment, at about 20-65°C.

The examples are merely meant to illustrate the invention, without in any way confining it.

## Claims

1. A procedure for producing fodder raw material containing keratinous material, the keratinous material being wet-cleaned; the cleaned, wet keratinous material being dewatered by pressing and the material being cut-up; the cut-up keratinous material being treated chemically and/or enzymatically, whereafter the material product thus obtained is brought into the form in which it will be used in fodder, wherein the keratinous material is pressed with a screw press which is encircled by a perforated shell, whereby the water contained in the material escapes through the holes in the shell, **characterized** in that the pressed keratinous material is pressed through a perforated plate and cut with the aid of at least one rotating cutter blade against the perforated plate to degree of comminution about 1-30 mm, advantageously about 2-10 mm.

2. Procedure according to claim 1, **characterized** in that the keratinous material is cut with rotating blade cutters against the perforated plate cooperating with each cutter.

3. Procedure according to claim 1 or 2, **characterized** in that the keratinous material is pressed/cut so that it becomes heated to a temperature about 20-65'C.

4. Procedure according to any one of claims 1-3, **characterized** in that the wet keratinous material being pressed has dry matter content about 10-30% by weight, suitably about 15-20% by weight and the keratinous material is pressed to dry matter content about 30-65% by weight, suitably about 40-60% by weight.

5. Procedure according to any one of claims 1-4, **characterized** in that the cut-up keratinous material is treated with an enzyme preparation decomposing the material.

6. Procedure according to any one of claims 1-5, **characterized** in that to the keratinous material are admixed about 5-80% by weight of one or several fodder components selected from a group comprising soybean, cereal, plant husks or another equivalent known fodder component containing carbohydrates and possessing fodder value; and enzyme preparation decomposing the keratinous material and/or enzyme preparation decomposing the fodder component that has been added; the mixture thus obtained is kept at a temperature about 20-65'C; the enzyme-treated mixture is extruded; and the extruded product is dried and brought into uniformly granular form.

7. Procedure according to claim 6, **characterized** in that the mixture containing cut-up keratinous material, added fodder component and one or several enzyme preparations is agitated so that the friction produced in the mixer maintains the temperature in the range about 20-65°C.

8. Procedure according to any one of claims 1-7, **characterized** in that the keratinous material is feathers and/or hairs.

9. A fodder raw material containing keratinous material, **characterized** in that the fodder raw material has been produced by a procedure according to any one of claims 1-8 and it contains about 20-100% by weight of treated keratinous material and about 0-80% by weight of one or several added fodder components selected from a group comprising soybean, cereal, plant husks or another equivalent known fodder component containing carbohydrates and possessing fodder value.

10. Apparatus for treating keratinous material to be processed into fodder raw material, said apparatus comprising a feed section (22) provided with a feed aperture (20), for receiving the keratinous material; a press section (23) provided with a screw press (25) and an exit aperture (21) for removing the pressed material from the apparatus, wherein the screw press is encircled by a perforated (34) shell (27), for pressing the wet material coming from the feed section and for dewatering it through the holes in the shell, **characterized** in that the apparatus comprises a cutter device (24) for cutting up the pressed keratinous material to a suitable degree of comminution, wherein the cutter device (24) has been disposed in conjunction with the exit aperture (21) of the apparatus (4) in extension of the screw press (25) and the cutter device comprises, consecutively disposed, at least one cutter (31) provided with at least one blade attached to the hub, and at least one perforated plate (32).

11. Apparatus according to claim 10, **characterized** in that the cutter device (24) comprises a plurality of blade cutters (31) and perforated plates (32), disposed consecutively and alternatingly.

12. Apparatus according to claim 10 or 11, **characterized** in that the screw press (25) extends from the feed section (22) to the press section (23) and the free cross section area of the screw press is substantially smaller in the press section than in the feed section.

13. Apparatus according to any one of claims 10-12, **characterized** in that in the press section (23) the distance h between the outer surface (30) of the shell of the shaft (26) of the screw press (25) and the inner surface (29) of the shell (27) encircling the screw press is about 4-20%, advantageously 7-15%, of the inner diameter of the shell.

14. Apparatus according to any one of claims 10-13, **characterized** in that the pitch of the screw (33) of the screw press (25) diminishes towards the cutter section (24).

15. Apparatus according to any one of claims 10-14, **characterized** in that at least on the inner surface of the shell (27) of the press section (23) have been provided guide rails (40) longitudinal to the axis (25) of the screw press (26) for guiding the travel of the keratinous material in the apparatus.

16. Apparatus according to any one of claims 10-15, **characterized** in that the number of holes (34) in the shell (27) of the press section (23) is 100-900.

## Patentansprüche

1. Verfahren zum Herstellen von Futterrohmaterial, das Hornmaterial enthält, wobei das Hornmaterial naß gereinigt wird, das gereinigte Hornmaterial durch Pressen entwässert wird, und das Material zerschnitten wird, das zerschnittene Hornmaterial chemisch und/oder enzymatisch behandelt wird, das so hergestellte Materialerzeugnis anschließend in die Form gebracht wird, in der es als Futter eingesetzt wird, wobei das Hornmaterial mit einer Schneckenpresse gepreßt wird, die von einer mit Löcher versehenen Ummantelung umschlossen ist, so daß das in dem Material enthaltene Wasser durch die Löcher in der Ummantelung austritt, **dadurch gekennzeichnet, daß** das gepreßte Hornmaterial durch eine Lochplatte gepreßt und mit Hilfe wenigstens einer sich drehenden Schneidklinge an der Lochplatte bis auf einen Zerkleinerungsgrad von ungefähr 1 - 30 mm, vorteilhafterweise ungefähr 2 - 10 mm, geschnitten wird.

2. Verfahren nach Anspruch 1, **dadurch gekennzeichnet, daß** das Hornmaterial mit sich drehenden Klingenschneidern an der Lochplatte geschnitten wird, die mit jedem Schneider zusammenwirkt.

3. Verfahren nach Anspruch 1 oder 2, **dadurch gekennzeichnet, daß** das Hornmaterial so gepreßt/geschnitten wird, daß es sich auf eine Temperatur von ungefähr 20 - 65°C erwärmt.

4. Verfahren nach einem der Ansprüche 1 - 3, **dadurch gekennzeichnet, daß** das nasse Hornmaterial, das gepreßt wird, einen Trockensubstanzgehalt von ungefähr 10 - 30 Gew.-%, geeigneterweise ungefähr 15 - 20 Gew.-%, hat und das Hornmaterial auf einen Trockensubstanzgehalt von ungefähr 30 - 65 Gew.-%, geeigneterweise ungefähr 40 - 60 Gew.-%, gepreßt wird.

5. Verfahren nach einem der Ansprüche 1 - 4, **dadurch gekennzeichnet, daß** das geschnittene Hornmaterial mit einem Enzympräparat behandelt wird, das das Material aufspaltet.

6. Verfahren nach einem der Ansprüche 1 - 5, **dadurch gekennzeichnet, daß** dem Hornmaterial ungefähr 5 - 80 Gew.-% eines oder mehrerer Futterbestandteile, die aus einer Gruppe ausgewählt werden, die Sojabohnen, Getreide, Pflanzenhülsen oder einen anderen äquivalenten bekannten Futterbestandteil umfaßt, der Kohlenwasserstoffe enthält und Futterwert besitzt, sowie ein Enzympräparat beigemischt werden, das den zugesetzten Futterbestandteil aufspaltet, wobei das so entstehende Gemisch auf einer Temperatur von ungefähr 20 - 65°C gehalten wird, das mit Enzym behandelte Gemisch extrudiert wird und das extrudierte Erzeugnis getrocknet und in einheitliche Kornform gebracht wird.

7. Verfahren nach Anspruch 6, **dadurch gekennzeichnet, daß** das Gemisch, das geschnittenes Hornmaterial, zugesetzten Futterbestandteil und eines oder mehrere Enzympräparate enthält, so bewegt wird, daß durch die in der Mischeinrichtung erzeugte Reibung die Temperatur im Bereich von ungefähr 20 - 65°C gehalten wird.

8. Verfahren nach einem der Ansprüche 1 - 7, **dadurch gekennzeichnet, daß** es sich bei dem Hornmaterial um Federn und/oder Haare handelt.

9. Futterrohmaterial, das Hornmaterial enthält, **dadurch gekennzeichnet, daß** das Futterrohmaterial mit einem Verfahren nach einem der Ansprüche 1 - 8 hergestellt wurde, und daß es ungefähr 20 - 100 Gew.-% behandeltes Hornmaterial und ungefähr 0 - 8 Gew.-% eines oder mehrerer zugesetzter Futterbestandteile enthält, die aus einer Gruppe ausgewählt werden, die Sojabohnen, Getreide, Pflanzenhülsen oder einen anderen äquivalenten bekannten Futterbestandteil umfaßt, der Kohlenwasserstoffe enthält und Futterwert besitzt.

10. Vorrichtung zum Behandeln von Hornmaterial, das zu Futterrohmaterial verarbeitet werden soll, wobei die Vorrichtung einen Zuführabschnitt (22) umfaßt, der mit einer Zuführöffnung (20) zur Aufnahme des Hornmaterials versehen ist; einen Preßabschnitt (23), der mit einer Schneckenpresse (25) und einer Austrittsöffnung (21) zum Entfernen des gepreßten Materials aus der Vorrichtung versehen ist, wobei die Schneckenpresse von einer mit Löchern (34) versehenen Ummantelung (27) umschlossen ist, um das aus dem Zuführabschnitt kommende nasse Material zu pressen und es durch die Löcher in der Ummantelung zu entwässern, **dadurch gekennzeichnet, daß** die Vorrichtung eine Schneidervorrichtung (24) umfaßt, die das gepreßte Hornmaterial auf einen geeigneten Zerkleinerungsgrad schneidet, wobei die Schneidervorrichtung (24) in Verbindung mit der Austrittsöffnung (21) der Vorrichtung (4) in Verlängerung der Schneckenpresse (25) angeordnet ist und die Schneidervorrichtung aufeinanderfolgend angeordnet, wenigstens einen Schneider (31), der mit wenigstens einer an der Nabe angebrachten Klinge versehen ist, und wenigstens eine Lochplatte (32) umfaßt.

11. Vorrichtung nach Anspruch 10, **dadurch gekennzeichnet, daß** die Schneidervorrichtung (24) eine Vielzahl von Klingenschneidern (31) und Lochplatten (32) umfaßt, die aufeinanderfolgend und abwechselnd angeordnet sind.

12. Vorrichtung nach Anspruch 10 oder 11, **dadurch gekennzeichnet, daß** die Schneckenpresse (25) sich von dem Zuführabschnitt (22) zu dem Preßabschnitt (23) erstreckt und die freie Querschnittsfläche der Schneckenpresse in dem Preßabschnitt erheblich kleiner ist als in dem Zuführabschnitt.

13. Vorrichtung nach einem der Ansprüche 10 - 12, **dadurch gekennzeichnet, daß** in dem Preßabschnitt (23) der Abstand h zwischen der Außenfläche (30) der Ummantelung der Welle (23) der Schneckenpresse (25) und der Innenfläche (29) der Ummantelung (27), die die Schneckenpresse umschließt, ungefähr 4 - 20 %, vorteilhafterweise 7 - 15 %, des Innendurchmessers der Ummantelung beträgt.

14. Vorrichtung nach einem der Ansprüche 10 - 13, **dadurch gekennzeichnet, daß** die Steigung der Schnecke (33) der Schneckenpresse (25) in Richtung des Schneiderabschnitts (24) abnimmt.

15. Vorrichtung nach einem der Ansprüche 10 - 14, **dadurch gekennzeichnet, daß** wenigstens an der Innenfläche (27) des Preßabschnitts (23) Führungsschienen (40) längs zur Achse (25) der Schneckenpresse (26) vorhanden sind, die die Bewegung des Hornmaterials der Vorrichtung führen.

16. Vorrichtung nach einem der Ansprüche 10 - 15, **dadurch gekennzeichnet, daß** die Anzahl der Löcher (34) in der Ummantelung (27) des Preßabschnitts (23) 100 - 900 beträgt.

## Revendications

1. Procédé pour préparer une matière fourragère brute contenant une matière kératinique, la matière kératinique étant nettoyée par voie humide; la matière kératinique nettoyée, humide, étant éssorée par pressage et la matière étant hachée; la matière kératinique hachée étant traitée par voie chimique et/ou enzymatique, après quoi le produit ainsi obtenu est mis dans la forme dans laquelle il sera utilisé comme fourrage, procédé dans lequel la matière kératinique est pressée avec une presse à vis entourée par une coque perforée, de sorte que l'eau contenue dans la matière s'échappe à travers les trous de la coque, caractérisé en ce que la matière kératinique pressée est pressée à travers une plaque perforée et coupée à l'aide d'au moins une lame de coupe rotative contre la plaque perforée jusqu'à un degré de fragmentation d'environ 1 à 30 mm, avantageusement environ 2 à 10 mm.

2. Procédé selon la revendication 1, caractérisé en ce que la matière kératinique est coupée avec des couteaux à lame rotative contre la plaque perforée coopérant avec chaque couteau.

3. Procédé selon la revendication 1 ou 2, caractérisé en ce que la matière kératinique est pressée/coupée de façon à se trouver chauffée à une température d'environ 20 à 65°C.

4. Procédé selon l'une quelconque des revendications 1 à 3, caractérisé en ce que la matière kératinique humide que l'on presse possède une teneur en matière sèche d'environ 10 à 30% en poids, de manière appropriée environ 15 à 20% en poids, et la matière kératinique est pressée jusqu'à avoir une teneur en matière sèche d'environ 30 à 65% en poids, de manière appropriée environ 40 à 60% en poids.

5. Procédé selon l'une quelconque des revendications 1 à 4, caractérisé en ce que la matière kératinique hachée est traitée avec une préparation enzymatique qui décompose la matière.

6. Procédé selon l'une quelconque des revendications 1 à 5, caractérisé en ce qu'à la matière kératinique sont ajoutés environ 5 à 80% en poids d'un ou plusieurs composant(s) fourrager(s) choisis dans un groupe comprenant le soja, les céréales, des cosses de plantes ou autre composant fourrager connu équivalent contenant des glucides et possédant une valeur fourragère; et une préparation enzymatique décomposant la matière kératinique et/ou une préparation enzymatique décomposant le composant fourrager qui a été ajouté; le mélange ainsi obtenu est conservé à une température d'environ 20 à 65°C; le mélange traité aux enzymes est extrudé; et le produit extrudé est séché et mis sous forme granulaire uniforme.

7. Procédé selon la revendication 6, caractérisé en ce que le mélange contenant la matière kératinique hachée, le composant fourrager ajouté et une ou plusieurs préparations enzymatiques, est agité de façon que la friction produite dans le mélangeur maintienne la température dans la gamme d'environ 20 à 65°C.

8. Procédé selon l'une quelconque des revendications 1 à 7, caractérisé en ce que la matière kératinique est des plumes et/ou des poils.

9. Matière fourragère brute contenant de la matière kératinique, caractérisée en ce que la matière fourragère brute a été produite par un procédé selon l'une quelconque des revendications 1 à 8 et contient environ 20 à 100% en poids de matière kératinique traitée et environ 0 à 80% en poids d'un ou plusieurs composants fourragers ajoutés choisis dans un groupe comprenant le soja, les céréales, les cosses de plantes ou autre composant fourrager connu équivalent contenant des glucides et possédant une valeur fourragère.

10. Appareil pour traiter une matière kératinique à transformer en matière fourragère brute, cet appareil comprenant un poste d'alimentation (22) muni d'une ouverture d'alimentation (20) pour recevoir la matière kératinique; un poste de pressage (23) muni d'une presse à vis (25) et une ouverture de sortie (21) pour enlever le matériau pressé de l'appareil, la presse à vis étant entourée par une coque (27) perforée (34), pour presser la matière humide arrivant du poste d'alimentation et pour l'essorer à travers les trous de la coque, caractérisé en ce que l'appareil comprend un dispositif de coupe (24) pour hacher la matière kératinique pressée jusqu'à un degré de fragmentation approprié, le dispositif de coupe (24) ayant été disposé conjointement avec l'ouverture de sortie (21) de l'appareil (4) dans le prolongement de la presse à vis (25), et le dispositif de coupe comprenant, disposés consécutivement, au moins un couteau (31) muni d'au moins une lame attachée au moyeu, et au moins une plaque perforée (32).

11. Appareil selon la revendication 10, caractérisé en ce que le dispositif de coupe (24) comprend plusieurs couteaux à lame (31) et plaques perforées (32), disposés consécutivement et alternativement.

12. Appareil selon la revendication 10 ou 11, caractérisé en ce que la presse à vis (25) s'étend du poste d'entrée (22) au poste de pressage (23) et l'aire de section transversale libre de la presse à vis est sensiblement plus petite dans le poste de pressage que dans le poste d'alimentation.

13. Appareil selon l'une quelconque des revendications 10 à 12, caractérisé en ce que dans le poste de pressage (23) la distance h entre la surface extérieure (30) de la coque de l'arbre (26) de la presse à vis (25) et la surface intérieure (29) de la coque (27) entourant la presse à vis est d'environ 4 à 20%, avantageusement 7 à 15%, du diamètre intérieure de la coque.

14. Appareil selon l'une quelconque des revendications 10 à 13, caractérisé en ce que le pas de la vis (33) de la presse à vis (25) diminue vers le poste de coupe (24).

15. Appareil selon l'une quelconque des revendications 10 à 14, caractérisé en ce qu'au moins sur la surface intérieure de la coque (27) du poste de pressage (23) ont été prévus des rails de guidage (40) qui sont longitudinaux relativement à l'axe (25) de la presse à vis (26), pour guider le déplacement de la matière kératinique dans l'appareil.

16. Appareil selon l'une quelconque des revendications 10 à 15, caractérisé en ce que le nombre de trous (34) dans la coque (27) du poste de pressage (23) est de 100 à 900.
